# DEMANDE DE BREVET EUROPEEN

(11) **EP 1 418 324 A2**
(43) Date de publication de la demande: **12.05.2004**
(21) Numéro de dépôt: 03292751.9
(22) Date de dépôt: 04.11.2003
(51) Int. Cl.: F02D 41/02, F01N 3/023

(54) **Procédé de régénération d'un filtre à particules et dispositif de mise en oeuvre**

(30) Priorité: 07.11.2002 FR 0213942
(71) Demandeur: Renault s.a.s., 92100 Boulogne Billancourt (FR)
(72) Inventeur: Baux, Antoine, 75015 Paris (FR); Marcelly, Bruno, 91590 Cerny (FR); Cruchet, Jérôme, 91600 Savigny sur Orge (FR)
(74) Mandataire: Cemeli, Eric

(57) **Abrégé**

L'invention concerne un procédé de régénération d'un filtre à particules dans le circuit d'échappement d'un moteur thermique, comprenant notamment des moyens d'oxydation et un calculateur électronique, tel que la régénération du filtre (6) étant provoquée par injection retardée de carburant, il consiste à réguler le retard (ϕ) de cette injection (Q) en fonction de l'écart (s) entre la température des gaz d'échappement (Tₑ) et une consigne (T_{c}) de combustion, et à réajuster la quantité de carburant durant cette injection pour maintenir un couple moteur constant. Si la température (Tₑ) mesurée est inférieure, respectivement supérieure, à la consigne (T_{c}), le calculateur (4) commande un retard supérieur, respectivement inférieur, au retard (ϕ) déterminé lorsque la température (Tₑ) est égale à la consigne, et une augmentation, respectivement une diminution, du carburant injecté pour élever, respectivement abaisser, la température (Tₑ) jusqu'à la consigne (T_{c}).

Elle concerne également un dispositif de mise en oeuvre du procédé.

Application aux véhicules automobiles.

## Description

La présente invention concerne un procédé de régénération d'un filtre à particules dans le circuit d'échappement d'un moteur à combustion interne et un dispositif de mise en oeuvre de ce procédé. Elle vise plus particulièrement à assurer la régénération du filtre à particules, classique ou catalytique, quelles que soient les dispersions de production des moteurs, notamment pour véhicules automobiles, tout en évitant sa destruction par une thermique trop élevée.

Un filtre à particules inséré dans le circuit d'échappement des gaz d'un moteur thermique est un moyen connu pour éliminer les particules de suie émises par les gaz d'échappement, et ainsi pour diminuer la pollution d'un tel moteur. Un filtre à particules catalytique présente une paroi intérieure recouverte d'une couche de matériau imprégnée de métaux précieux, appelée « wash coat » et assurant une fonction d'oxydation destinée à diminuer la température de combustion des particules de suie.

Pour assurer le fonctionnement d'un filtre à particules et éviter son colmatage par les suies, ce qui dégraderait les performances du moteur, il est nécessaire de procéder périodiquement à une régénération qui consiste à brûler les suies. Cette combustion des suies est provoquée par élévation de la température des gaz d'échappement aux environs de 600°C, obtenue en dégradant le rendement moteur par des moyens appropriés d'aide à la régénération.

Un procédé actuel pour augmenter la température des gaz d'échappement consiste à retarder l'injection principale de carburant qui produit du couple moteur d'un angle ϕ déterminé par rapport au point mort haut PMH et dépendant du point de fonctionnement du moteur. Ainsi, la régénération d'un filtre à particules catalytique utilise l'énergie dégagée par la dégradation du rendement thermique de la combustion.

La mise en action des différents moyens d'aide à la régénération est pilotée par le calculateur de contrôle moteur qui détermine, en fonction de plusieurs paramètres dont le chargement en suies du filtre à particules catalytique, l'instant de la régénération ainsi que sa durée et les paramètres d'injection pendant cette phase, tels que le nombre d'injections, le débit, la durée et le phasage de chaque injection.

Contrairement au cas des filtres à particules classiques, la plage de températures dans laquelle il faut piloter la régénération d'un filtre à particules catalytique est relativement étroite. En dessous de 570°C, il ne peut y avoir de combustion, et au-dessus de 650°C, il y a un risque de dégradation de la phase catalytique du filtre à particules. De plus, la vitesse de combustion des suies varie fortement entre 570°C et 650°C. Ceci oblige à piloter la température du filtre à particules avec une précision de plus ou moins 20°C. Malheureusement, en raison des dispersions du système d'injection, c'est-à-dire des injecteurs ou de la cible du volant moteur notamment, on peut atteindre, d'un moteur à un autre pour un même réglage des paramètres d'injection, des dispersions de ±50°C en température avant filtre.

Le but de la présente invention est de permettre la régénération d'un filtre à particules de type classique ou catalytique, en respectant la plage de températures nécessaire.

Pour cela, un premier objet de l'invention est un procédé de régénération d'un filtre à particules dans le circuit d'échappement d'un moteur à combustion interne, comprenant un capteur de température placé en amont du filtre à particules et délivrant des informations à un calculateur électronique de contrôle moteur pilotant entre autres le débit d'air et l'injection de carburant dans le moteur, caractérisé en ce que la régénération du filtre à particules est provoquée par retard de l'injection principale produisant du couple moteur, d'un angle ϕ déterminé par rapport au point mort haut et dépendant du point de fonctionnement du moteur, et le procédé consiste à réguler le retard de l'injection principale en fonction de l'écart entre la température de gaz d'échappement mesurée par le capteur et une température de consigne, et à réajuster la quantité de carburant durant cette injection principale pour maintenir un couple moteur constant.

Selon une autre caractéristique du procédé selon l'invention, si la température des gaz d'échappement délivrée par le capteur est inférieure à la température de consigne, le calculateur de contrôle moteur commande d'une part un retard ϕ' de l'injection principale, supérieur au retard ϕ déterminé lorsque la température de gaz d'échappement mesurée est égale à la température de consigne, et d'autre part une augmentation de la quantité de carburant injectée, dans le but d'élever la température des gaz d'échappement jusqu'à la valeur de consigne de combustion.

Selon une autre caractéristique du procédé selon l'invention, si la température des gaz d'échappement délivrée par le capteur est supérieure à la température de consigne, le calculateur de contrôle moteur commande un retard ϕ" de l'injection principale, inférieur au retard ϕ déterminé lorsque la température de gaz d'échappement mesurée est égale à la température de consigne, et d'autre part une diminution de la quantité de carburant injectée, dans le but d'abaisser la température des gaz d'échappement jusqu'à la valeur de consigne de combustion.

Un second objet est un dispositif de mise en oeuvre du procédé de régénération d'un filtre à particules, dans le circuit d'échappement d'un moteur à combustion interne, comprenant un capteur de température placé en amont du filtre à particules et délivrant des informations à un calculateur électronique de contrôle moteur pilotant entre autres le débit d'air et l'injection de carburant dans le moteur, caractérisé en ce qu'il comprend un comparateur de la température mesurée à l'échappement du moteur, par le capteur en amont du filtre à particules, avec une température de consigne de combustion, l'écart entre ces deux valeurs étant envoyé à un régulateur qui régule le retard de l'injection principale en fonction de l'écart entre la température de gaz d'échappement mesurée et la température de consigne afin que la température délivrée par le capteur tende vers la valeur de consigne, qui est déterminée par le calculateur de contrôle moteur, destiné à commander alors un retard de l'injection principale, et simultanément à réguler la quantité de cette injection principale pour rester à iso-couple moteur.

D'autres caractéristiques et avantages de l'invention apparaîtront à la lecture de la description de deux exemples de procédés de régénération d'un filtre à particules catalytique, illustrée pour les figures suivantes qui sont :
- la figure 1 : un schéma du circuit d'échappement d'un moteur thermique équipé d'un filtre à particules ;
- les figures 2a et 2b : la quantité de carburant injectée en fonction de l'angle du vilebrequin, respectivement hors et en phase de régénération du filtres à particules ;
- la figure 3 : le schéma d'un dispositif de mise en oeuvre du procédé de régulation de l'injection en phase de régénération d'un filtre à particules par injection retardée, selon l'invention.

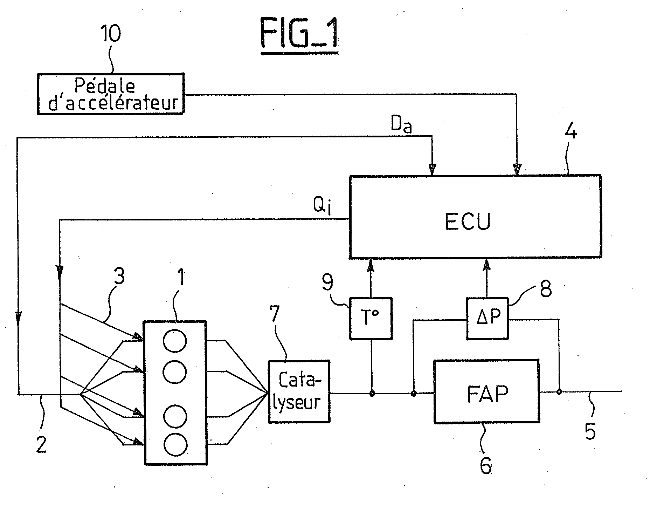

Comme le montre le schéma de la figure 1, un moteur à combustion interne 1, de type Diesel ou à injection d'essence, reçoit de l'air d'un circuit d'admission 2 et du carburant d'un ensemble d'injecteurs 3, le débit d'air Dₐ et la quantité de carburant injecté Qᵢ étant commandés par un calculateur électronique 4 de contrôle moteur qui gère la loi d'injection du carburant dans les cylindres du moteur, en particulier en fonction de la position de la pédale d'accélérateur 10.

Un circuit 5 d'échappement des gaz émis à la suite de la combustion du mélange air-carburant comporte un filtre à particules 6, classique ou catalytique, destiné à piéger les particules de suie contenues dans les gaz d'échappement, avec ou sans catalyseur d'oxydation en amont. Un capteur 8 de pression différentielle est placé de part et d'autre du filtre à particules et au moins un capteur 9 de température est placé en amont du filtre à particules pour délivrer des informations au calculateur 4 de contrôle moteur permettant de mesurer le colmatage du filtre à particules.

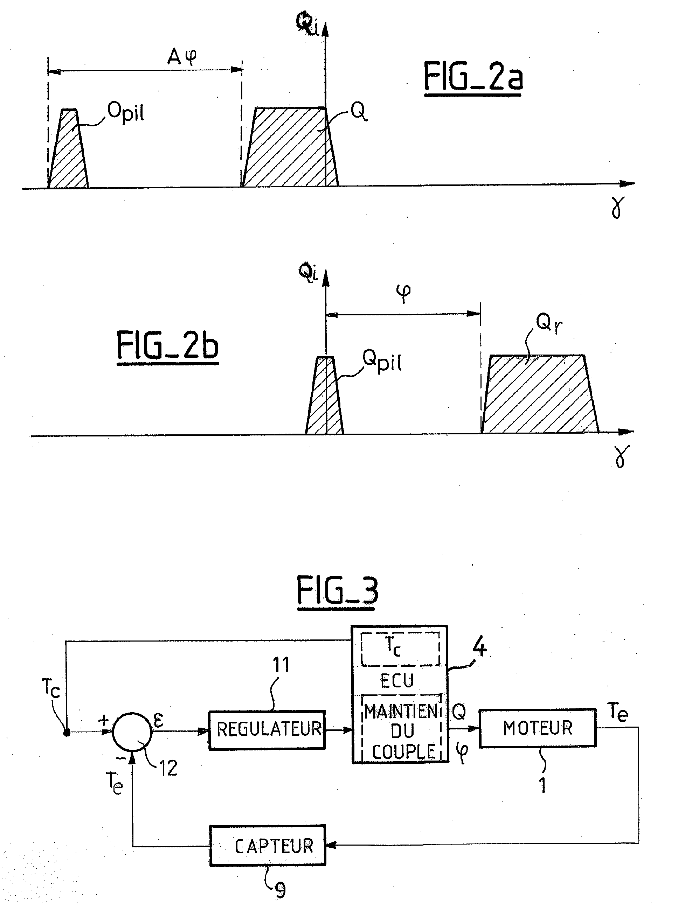

Selon le diagramme de la figure 2a, qui représente la quantité Qᵢ de carburant injecté lors du fonctionnement normal du moteur, une quantité principale Q de carburant est injectée au niveau d'un point particulier de l'angle y du vilebrequin, au voisinage du point mort haut PMH. Une quantité pilote Qₚᵢₗ prédéterminée est injectée avant la quantité principale Qᵢ en avance de phase Aϕ, pour diminuer le bruit lié à la combustion de ladite quantité principale qui produit du couple et qui correspond à la plus grosse quantité de débit injecté.

Lorsque les capteurs de température et de pression, placés en amont et en aval du filtre à particules, délivrent au calculateur de contrôle moteur des informations représentatives du niveau de colmatage du filtre à particules nécessitant une régénération, le calculateur prend alors en compte le niveau de chargement en suies du filtre à particules et le point de fonctionnement du moteur pour commander une phase de combustion des particules de suies.

Une solution actuelle mise en oeuvre pour assurer la régénération d'un filtre à particules, quand la température des gaz d'échappement en amont du filtre est inférieure à la température de combustion des particules, consiste à retarder l'injection principale de carburant, d'un angle ϕ déterminé par rapport au point mort haut et dépendant du point de fonctionnement du moteur, et à retarder également la quantité pilote Qₚᵢₗ injectée avant, comme le montre la figure 2b. De plus, le calculateur de contrôle moteur doit ajuster le débit de cette injection principale Q pour rester à iso-couple. Dans le cas de la figure 2b, la quantité retardée injectée Qᵣ est supérieure à la quantité injectée Q hors régénération. Ainsi l'injection principale produit davantage d'exothermicité du fait de la dégradation du rendement de combustion.

Une caractéristique de l'invention consiste à réguler le retard de l'injection principale en fonction de l'écart entre la température des gaz d'échappement mesurée et la température de consigne nécessaire à une bonne combustion des particules de suies sans dégradation du filtre à particules. Le calculateur de contrôle moteur peut commander une augmentation ou une diminution de l'exothermicité en pilotant le retard ϕ de l'injection principale, à condition cependant de réajuster le débit de cette injection principale pour rester à iso-couple. En effet, la modulation du retard de l'injection principale modifie le couple produit, de telle sorte que la quantité de carburant durant cette injection principale doit être modifié pour maintenir un couple moteur constant.

Si l'angle de l'injection principale est retardé, le maintien à iso-couple est obtenu en augmentant ou en diminuant la quantité de carburant injecté selon la valeur de ce retard. Dans le cas où la température Tₑ des gaz d'échappement délivrée par un capteur est inférieure à la température T_{c} de consigne, le calculateur de contrôle moteur commande d'une part un retard ϕ' de l'injection principale retardée, supérieur au retard ϕ déterminé lorsque la température des gaz d'échappement mesurée est égale à la température de consigne, et d'autre part une augmentation de la quantité de carburant injectée, Q' supérieure à Qᵣ, dans le but d'élever la température des gaz d'échappement jusqu'à la valeur de consigne de combustion.

Dans le cas où la température Tₑ des gaz d'échappement délivrée par un capteur est supérieure à la température T_{c} de consigne, le calculateur de contrôle moteur commande un retard ϕ" de l'injection principale retardée, inférieur au retard ϕ déterminé lorsque la température des gaz d'échappement mesurée est égale à la température de consigne, et d'autre part une diminution de la quantité de carburant injectée, Q" inférieure à Qᵣ, dans le but d'abaisser la température des gaz d'échappement jusqu'à la valeur de consigne de combustion.

La figure 3 représente le schéma de principe d'une régulation de l'injection retardée à partir de la température d'échappement mesurée. La température Tₑ des gaz d'échappement en sortie du moteur 1 est mesurée par un capteur 9, placé dans l'échappement, qui délivre une valeur Tₑ destinée à être comparée à une valeur de consigne T_{c} de combustion, dans un comparateur 12. Un régulateur 11 reçoit du comparateur l'écart s entre ces deux valeurs et asservit le retard de l'injection principale à cet écart afin que la valeur mesurée Tₑ de la température d'échappement suive la valeur de consigne T_{c}. Le calculateur 4 de contrôle moteur commande alors un retard ϕ de l'injection principale Q, et pour rester à iso-couple moteur, doit simultanément réguler la quantité de cette injection principale Q qui est modifié en phase de régénération du filtre à particules. La fonction de « maintien du couple » dans le calculateur est une loi qui établit une relation entre le débit de carburant, son retard d'injection et le couple résultant. Elle permet donc, lorsqu'on modifie l'un des deux paramètres, de réajuster le second afin de rester à couple constant.

Grâce à l'invention, la régénération d'un filtre à particules, de type classique ou catalytique, est réalisée quelques soient les dispersions de production des moteurs tout en évitant sa destruction par une thermique trop élevée.

## Revendications

1. Procédé de régénération d'un filtre à particules dans le circuit d'échappement d'un moteur à combustion interne, comprenant un capteur de température placé en amont du filtre à particules et délivrant des informations à un calculateur électronique de contrôle moteur pilotant entre autres le débit d'air et l'injection de carburant dans le moteur, **caractérisé en ce que** la régénération du filtre à particules (6) est provoquée par retard de l'injection principale produisant du couple moteur, d'un angle (ϕ) déterminé par rapport au point mort haut et dépendant du point de fonctionnement du moteur, et le procédé consiste à réguler le retard de l'injection principale en fonction de l'écart (ε) entre la température (Tₑ) des gaz d'échappement mesurée par le capteur (9) et une température (T_{c}) de consigne de combustion, et à réajuster la quantité de carburant durant cette injection principale pour maintenir un couple moteur constant.

2. Procédé de régénération selon la revendication 1, **caractérisé en ce que** la température de consigne (T_{c}) est déterminée par le calculateur électronique (4) de façon à être inférieure à la température de destruction du filtre à particules et supérieure à la température de combustion des suies qu'il contient.

3. Procédé de régénération selon la revendication 2, **caractérisé en ce que**, si la température (Te) des gaz d'échappement délivrée par le capteur est inférieure à la température de consigne (T_{c}), le calculateur (4) de contrôle moteur commande d'une part un retard (ϕ') de l'injection principale retardée, supérieur au retard (ϕ) déterminé lorsque la température de gaz d'échappement mesurée est égale à la température de consigne, et d'autre part une augmentation de la quantité de carburant injectée (Q'), dans le but d'élever la température des gaz d'échappement jusqu'à la valeur de consigne (Tc) de combustion.

4. Procédé de régénération selon la revendication 2, **caractérisé en ce que**, si la température (Te) des gaz d'échappement délivrée par le capteur est supérieure à la température de consigne (T_{c}), le calculateur (4) de contrôle moteur commande un retard (ϕ") de l'injection principale retardée, inférieur au retard (ϕ) déterminé lorsque la température (Te) des gaz d'échappement mesurée est égale à la température (T_{c}) de consigne, et d'autre part une diminution de la quantité (Q") de carburant injectée, dans le but d'abaisser la température des gaz d'échappement jusqu'à la valeur de consigne de combustion.

5. Dispositif de mise en oeuvre du procédé de régénération d'un filtre à particules selon l'une des revendications 1 à 4, dans le circuit d'échappement d'un moteur (1) à combustion interne, comprenant un capteur (9) de température placé en amont du filtre à particules et délivrant des informations à un calculateur électronique (4) de contrôle moteur pilotant entre autres le débit d'air et l'injection de carburant dans le moteur, **caractérisé en ce qu'**il comprend un comparateur (12) de la température (Te) mesurée à l'échappement du moteur (1), par le capteur (9), avec une température de consigne (Tc), l'écart (ε) entre ces deux valeurs étant envoyé à un régulateur (11) qui régule le retard de l'injection principale en fonction de l'écart entre la température de gaz d'échappement mesurée et la température de consigne afin que la température délivrée par le capteur tende vers la valeur de consigne, qui est déterminée par le calculateur de contrôle moteur, destiné à commander alors un retard (ϕ) de l'injection principale, et simultanément à réguler la quantité de cette injection principale (Q) pour rester à iso-couple moteur.
